# EUROPEAN PATENT APPLICATION

(11) **EP 4 432 483 A1**
(43) Date of publication of application: **18.09.2024**
(21) Application number: 22906105.6
(22) Date of filing: 04.11.2022
(51) Int. Cl.: H01R 13/6461

(54) **CONNECTOR AND COMMUNICATION DEVICE**

(30) Priority: 15.12.2021 CN 202123211469 U
(71) Applicant: Huawei Technologies Co., Ltd., Shenzhen, Guangdong 518129 (CN)
(72) Inventor: XIAO, Congtu, Shenzhen, Guangdong 518129 (CN); XIONG, Wang, Shenzhen, Guangdong 518129 (CN); ZHANG, Juwang, Shenzhen, Guangdong 518129 (CN); YAN, Bo, Shenzhen, Guangdong 518129 (CN)
(74) Representative: Maiwald GmbH
(86) International application number: PCT/CN2022/129925
(87) International publication number: WO 2023/109353

(57) **Abstract**

This application provides a connector and a communication device. The connector includes a connector module and a housing. The connector module includes at least four cable assemblies with a same structure and a housing fastener. The housing includes a first mounting opening, and the housing fastener includes a second mounting opening. One end of each cable assembly of the connector module is inserted into the second mounting opening. The housing fastener of the connector module is inserted into the first mounting opening. In this embodiment of this application, the at least four cable assemblies with the same structure are disposed in the connector module. In a manufacturing process, each component of the cable assembly needs a mold, and different cable assemblies may share the mold. This can reduce a quantity of molds required by the connector module, and perform normalized module configuration. In this way, manufacturing costs of the connector module are relatively low, and a processing process is relatively simple.

## Description

### CROSS-REFERENCE TO RELATED APPLICATIONS

This application claims priority to Chinese Patent Application No. 202123211469.4, filed with the China National Intellectual Property Administration on December 15, 2021 and entitled "CONNECTOR AND COMMUNICATION DEVICE", which is incorporated herein by reference in its entirety.

### TECHNICAL FIELD

This application relates to the field of communication technologies, and in particular, to a connector and a communication device.

### BACKGROUND

In current communication devices, bandwidth performance of connectors is a main factor that affects transmission performance of high-speed links. As channel density and a rate of a signal gradually increase, in an application scenario of a high rate of 112 Gbps or higher, a connection wire inside the connector becomes a key factor that affects performance of the connector, for example, may affect key indicators such as crosstalk and insertion losses of the connector.

In a conventional technology, a plurality of cable assemblies with different structures are usually inserted into a housing of a connector, to implement module connection. Each component of the cable assembly needs a mold in a manufacturing process. Therefore, in the conventional technology, the plurality of cable assemblies with the different structures need a relatively large quantity of molds, resulting in relatively high manufacturing costs of the connector.

### SUMMARY

Embodiments of this application provide a connector and a communication device, to resolve high manufacturing costs of the connector in a conventional technology.

According to a first aspect, an embodiment of this application provides a connector. The connector provided in this embodiment of this application may include a connector module and a housing. The connector module may be a quad small form factor pluggable (Quad Small Form Factor Pluggable, QSFP) connector, or a quad small form factor pluggable-double density (Quad Small Form Factor Pluggable-Double Density, QSFP-DD) connector. Alternatively, the connector module may be another type of connector. This is not limited herein. A material of the housing may be a metal material such as copper metal or stainless steel. In a specific implementation, the housing may be manufactured through a stamping process. The housing may include a first mounting opening, and the connector module is inserted into the first mounting opening. In addition, the housing may further accommodate an optical module. The optical module is an optoelectronic device that can perform optical-to-electrical and electrical-to-optical conversion. The connector module may be electrically connected to the optical module in the housing. Optionally, the connector module may include a spring plate, and the optical module may include a gold finger. The connector module may be electrically connected to the optical module by contacting the gold finger and the spring plate.

In this embodiment of this application, the connector module may include at least four cable assemblies with a same structure, and a housing fastener. The housing fastener may include a second mounting opening. One end of each cable assembly of the connector module is inserted into the second mounting opening, and the housing fastener of the connector module is inserted into the first mounting opening, so that the connector module may be electrically connected to the optical module by using the cable assembly. In actual application, one end of the cable assembly that is not inserted into the second mounting opening may be connected to a component like a circuit board or a chip. In a possible implementation, the housing fastener may be made of engineering plastic. For example, the housing fastener may be made of a liquid crystal polymer (LCP), or may be made of another material. This is not limited herein. In this embodiment of this application, an example in which the connector module includes the four cable assemblies is used for illustration. In a specific implementation, a quantity of cable assemblies may be set based on an actual requirement. This is not limited herein.

In this embodiment of this application, the at least four cable assemblies with the same structure are disposed in the connector module. In a manufacturing process, each component of the cable assembly needs a mold, and different cable assemblies may share the mold. This can reduce a quantity of molds required by the connector module, and perform normalized module configuration. In this way, manufacturing costs of the connector module are relatively low, and a processing process is relatively simple.

In a possible implementation, the cable assemblies of the connector module may be divided into a first cable assembly group and a second cable assembly group that are disposed side by side. The first cable assembly group includes at least two cable assemblies, and all the cable assemblies in the first cable assembly group are stacked. The second cable assembly group includes at least two cable assemblies, and all the cable assemblies in the second cable assembly group are stacked. In a specific implementation, the quantity of cable assemblies in the first cable assembly group and the quantity of cable assemblies in the second cable assembly group may be set based on the actual requirement. This is not limited herein. Optionally, the quantity of cable assemblies in the first cable assembly group may be equal to the quantity of cable assemblies in the second cable assembly group.

In some embodiments of this application, the connector module further includes a low-speed signal group. One end of the low-speed signal group is inserted into the second mounting opening, and the low-speed signal group is located between the first cable assembly group and the second cable assembly group. In this embodiment of this application, a low-speed signal can be transmitted by disposing the low-speed signal group.

In a possible implementation, the cable assembly may include a first cable module and a second cable module that are stacked. The first cable module may include a first differential terminal pair group, a first cable pair group, and a first shielding sheet group. The first differential terminal pair group is connected to the first cable pair group. The first shielding sheet group at least semi-encloses a part of the first differential terminal pair group. In this embodiment of this application, the first differential terminal pair group is disposed in the first cable module, to transmit a differential signal. In addition, the first shielding sheet group is disposed in the first cable module, and the first shielding sheet group at least semi-encloses the part of the first differential terminal pair group, so that crosstalk between differential signals in the first differential terminal pair group can be reduced.

In a possible implementation, the second cable module includes a second differential terminal pair group, a second cable pair group, and a second shielding sheet group. The second differential terminal pair group is connected to the second cable pair group. The second shielding sheet group at least semi-encloses a part of the second differential terminal pair group. In this embodiment of this application, the second differential terminal pair group is disposed in the second cable module, to transmit the differential signal. In addition, the second shielding sheet group is disposed in the second cable module, and the second shielding sheet group at least semi-encloses the part of the second differential terminal pair group, so that crosstalk between differential signals in the second differential terminal pair group can be reduced.

In a specific implementation, the first cable pair group is aligned with the second cable pair group, and an end part of the first differential terminal pair group extends beyond an end part of the second differential terminal pair group. In other words, a length of the first differential terminal pair group is greater than a length of the second differential terminal pair group. In addition, the end part of the second differential terminal pair group is connected to the first differential terminal pair group.

In a possible implementation, the first differential terminal pair group may include at least one first signal differential pair and a first fastening plastic. The first fastening plastic is used to fasten a position of each first signal differential pair in the first differential terminal pair group. The first differential terminal pair group may include two first signal differential pairs. In a specific implementation, all the first signal differential pairs in the first differential terminal pair group may be disposed on a same first metal member. In an actual process, the first metal member may be manufactured through copper alloy stamping, for example, may be manufactured by using phosphor bronze. The first fastening plastic may be made of engineering plastic, for example, the first fastening plastic may be made of liquid crystal polymer.

In a possible implementation, the second differential terminal pair group may include at least one second signal differential pair and a second fastening plastic. The second fastening plastic is used to fasten a position of each second signal differential pair in the second differential terminal pair group. The second differential terminal pair group may include two second signal differential pairs. In a specific implementation, all the second signal differential pairs in the second differential terminal pair group may be disposed on a same second metal member. In an actual process, the second metal member may be manufactured through copper alloy stamping, for example, may be manufactured by using phosphor bronze. The second fastening plastic may be made of engineering plastic, for example, may be made of liquid crystal polymer.

In a possible implementation, the first signal differential pair in the first metal member may include a welding portion, an intermediate signal connection portion, and a spring plate contact portion. In a specific implementation, the spring plate contact portion may be in contact with the gold finger of the optical module, so that the first cable module may be electrically connected to the optical module. Similar to the structure of the first metal member, the second signal differential pair in the second metal member may also include a welding portion, an intermediate signal connection portion, and a spring plate contact portion. In a specific implementation, the spring plate contact portion may be in contact with the gold finger of the optical module, so that the second cable module may be electrically connected to the optical module.

In some embodiments of this application, the first shielding sheet group may include a first metal shielding sheet and a first shielding fastening plastic. The first shielding fastening plastic is used to fasten a position of the first metal shielding sheet. In an actual manufacturing process, the first metal shielding sheet may be manufactured through copper alloy stamping, for example, the first metal shielding sheet may be made of phosphor bronze. The first metal shielding sheet may provide shielding for the first differential terminal pair group. The first shielding fastening plastic may be made of engineering plastic (for example, liquid crystal polymer).

In a possible implementation, the second shielding sheet group may include a second metal shielding sheet and a second shielding fastening plastic. The second shielding fastening plastic is used to fasten a position of the second metal shielding sheet. In an actual manufacturing process, the second metal shielding sheet may be manufactured through copper alloy stamping, for example, the second metal shielding sheet may be made of phosphor bronze. The second metal shielding sheet may provide shielding for the second differential terminal pair group. The second shielding fastening plastic may be made of engineering plastic (for example, liquid crystal polymer).

In a specific implementation, the first metal shielding sheet in the first shielding sheet group may semi-enclose the first differential terminal pair group. Optionally, the first metal shielding sheet may semi-enclose a position of the intermediate signal connection portion of the first signal differential pair. In this way, the first shielding sheet group may reduce the crosstalk between the first signal differential pairs. Similarly, the second metal shielding sheet in the second shielding sheet group may semi-enclose the second differential terminal pair group. Optionally, the second metal shielding sheet may semi-enclose a position of the intermediate signal connection portion of the second signal differential pair. In a specific implementation, the first differential terminal pair group may be connected to the first shielding sheet group through welding. The second differential terminal pair group may be connected to the second shielding sheet group through welding. In this way, the second shielding sheet group may reduce the crosstalk between the second signal differential pairs.

In a possible implementation, the first cable pair group may include at least two first cables disposed side by side, a first weld bonding adhesive, and a first weld joint shielding sheet. For example, the first cable pair group may include two first cables, and a quantity of first cables may be set based on an actual requirement. Each first cable is connected to the first weld joint shielding sheet, and the first weld bonding adhesive is used to fasten a weld joint of each first cable. In this embodiment of this application, the two first cable wires are disposed side by side in the first cable pair group, to transmit the differential signal. In a specific implementation, the first cable may be a high-speed shielded differential cable, and the first cable may be a cable of around 30 American wire gauge (American wire gauge, Awg). The first weld bonding adhesive may be made of engineering plastic. In a manufacturing process, the first cable may be first welded to the first differential terminal pair group. Next, the weld joint is fastened by using the first weld bonding adhesive, to protect the weld joint. Then, the first weld joint shielding sheet is welded, to reduce crosstalk at a position of the weld joint. The first weld joint shielding sheet may be manufactured through copper alloy stamping, for example, may be manufactured by using phosphor bronze.

In a possible implementation, the second cable pair group may include at least two second cables disposed side by side, a second weld bonding adhesive, and a second weld joint shielding sheet. For example, the second cable pair group may include two second cables, and a quantity of second cables may be set based on an actual requirement. Each second cable is connected to the second weld joint shielding sheet, and the second weld bonding adhesive is used to fasten a weld joint of each second cable. In this embodiment of this application, the two second cables are disposed side by side in the second cable pair group, to transmit the differential signal. In a specific implementation, the second cable may be the high-speed shielded differential cable, and the second cable may be a cable around 30 American wire gauge (American wire gauge, Awg). The second weld bonding adhesive may be made of engineering plastic. In a manufacturing process, the second cable may be first welded to the second differential terminal pair group. Next, the weld joint is fastened by using the second weld bonding adhesive, to protect the weld joint. Then, the second weld joint shielding sheet is welded, to reduce crosstalk at a position of the weld joint. The second weld joint shielding sheet may be manufactured through copper alloy stamping, for example, may be manufactured by using phosphor bronze.

In this embodiment of this application, the low-speed signal group may include five stacked low-speed connection devices. An arrangement direction of the low-speed connection devices in the low-speed signal group is consistent with a direction in which the first cable assembly group points toward the second cable assembly group. Each low-speed connection device may include a metal terminal and an injection molding plastic that encapsulates a part of the metal terminal. The metal terminal may include four connection terminals. In a manufacturing process, the metal terminal may be manufactured through the stamping process, and the metal terminal may be made of phosphor bronze material. After the metal terminal is manufactured, the metal terminal may be fastened by using the injection molding plastic. In a possible implementation, shapes of the low-speed connection devices in the low-speed signal group may be slightly different.

According to a second aspect, an embodiment of this application further provides a communication device. The communication device may include any one of the foregoing connectors, and an optical module. The optical module is electrically connected to the connector. The communication device may be an optical communication device, a router, a switch, a server, or the like. Because manufacturing costs of the foregoing connector are relatively low, costs of the communication device including the connector are also relatively low. In addition, the first shielding sheet group (or the second shielding sheet group) is disposed in the connector, so that the crosstalk between the first signal differential pairs (or the second signal differential pairs) can be reduced. Therefore, transmission efficiency of the differential signal transmitted in the connector is relatively high, and signal transmission efficiency of the communication device including the connector is also relatively high.

### BRIEF DESCRIPTION OF DRAWINGS

FIG. 1 is a schematic diagram of a structure of a connector according to an embodiment of this application;
FIG. 2 is a schematic diagram of a split structure of a connector according to an embodiment of this application;
FIG. 3 is a schematic diagram of a structure of a connector module according to an embodiment of this application;
FIG. 4 is a schematic diagram of a split structure of a connector module according to an embodiment of this application;
FIG. 5 is a schematic diagram of another split structure of a connector module according to an embodiment of this application;
FIG. 6 is a schematic diagram of a structure of a cable assembly according to an embodiment of this application;
FIG. 7 is a schematic diagram of a split structure of a cable assembly according to an embodiment of this application;
FIG. 8 is a schematic diagram of a split structure of a first cable module according to an embodiment of this application;
FIG. 9 is a schematic diagram of a split structure of a second cable module according to an embodiment of this application;
FIG. 10 is a schematic diagram of a structure of a first differential terminal pair group according to an embodiment of this application;
FIG. 11 is a schematic diagram of a split structure of a first differential terminal pair group according to an embodiment of this application;
FIG. 12 is a schematic diagram of a structure of a second differential terminal pair group according to an embodiment of this application;
FIG. 13 is a schematic diagram of a split structure of a second differential terminal pair group according to an embodiment of this application;
FIG. 14 is a schematic diagram of a structure of a first metal member according to an embodiment of this application;
FIG. 15 is a schematic diagram of a structure of a second metal member according to an embodiment of this application;
FIG. 16 is a schematic diagram of a front structure of a first shielding sheet group or a second shielding sheet group according to an embodiment of this application;
FIG. 17 is a schematic diagram of a rear structure of a first shielding sheet group or a second shielding sheet group according to an embodiment of this application;
FIG. 18 is a schematic diagram of a split structure of a first shielding sheet group according to an embodiment of this application;
FIG. 19 is a schematic diagram of a split structure of a second shielding sheet group according to an embodiment of this application;
FIG. 20 is a schematic diagram of a position relationship between a first differential terminal pair group (or a second differential terminal pair group) and a first shielding sheet group (or a second shielding sheet group);
FIG. 21 is schematic cross-sectional view along a dashed line L in FIG. 20;
FIG. 22 is a schematic diagram of a split structure of a first cable pair group according to an embodiment of this application;
FIG. 23 is a schematic diagram of a split structure of a second cable pair group according to an embodiment of this application;
FIG. 24 is a schematic diagram of a structure of a low-speed signal group according to an embodiment of this application;
FIG. 25 is a schematic diagram of a structure of a low-speed connection device according to an embodiment of this application; and
FIG. 26 is a schematic diagram of a split structure of a low-speed connection device according to an embodiment of this application.

### Reference numerals:

100: Connector; 101: Connector module; 102: Housing; 10: Cable assembly; 10a: First cable assembly group; 10b: Second cable assembly group; 11: First cable module; 111: First differential terminal pair group; 112: First cable pair group; 113: First shielding sheet group; 12: Second cable module; 121: Second differential terminal pair group; 122: Second cable pair group; 123: Second shielding sheet group; 20: Housing fastener; 30: Low-speed signal group; 31, 32, 33, 34, and 35: Low-speed connection device; 321: Metal terminal; 322: Injection molding plastic; 41: First metal member; 42: First fastening plastic; 41a and 41b: First signal differential pair; 411: Welding portion; 412: Intermediate signal connection portion; 413: Spring plate contact portion; 51: Second metal member; 52: Second fastening plastic; 51a and 51b: Second signal differential pair; 511: Welding portion; 512: Intermediate signal connection portion; 513: Spring plate contact portion; 61: First metal shielding sheet; 62: First shielding fastening plastic; 71: Second metal shielding sheet; 72: Second shielding fastening plastic; 81: First cable; 82: First weld bonding adhesive; 83: First weld joint shielding sheet; 91: Second cable; 92: Second weld bonding adhesive; 93: Second weld joint shielding sheet; U1: First mounting opening; U2: Second mounting opening; t: Connection terminal.

### DESCRIPTION OF EMBODIMENTS

To make the objectives, technical solutions, and advantages of this application clearer, the following further describes this application in detail with reference to the accompanying drawings.

It should be noted that identical reference numerals in the accompanying drawings of this application denote identical or similar structures. Therefore, repeated descriptions thereof are omitted. Terms of positions and directions in this application are described by using the accompanying drawings as an example. However, a change may also be made as required, and the change falls within the protection scope of this application. The accompanying drawings in this application are only used to illustrate relative position relationships and do not represent an actual scale.

To resolve a problem of relatively high manufacturing costs of a connector in a conventional technology, embodiments of this application provide a connector and a communication device. The connector may be used in various types of communication devices. For example, the communication device may be an optical communication device, a router, a switch, a server, or the like. Certainly, the connector may further be used in another type of communication device. This is not limited herein.

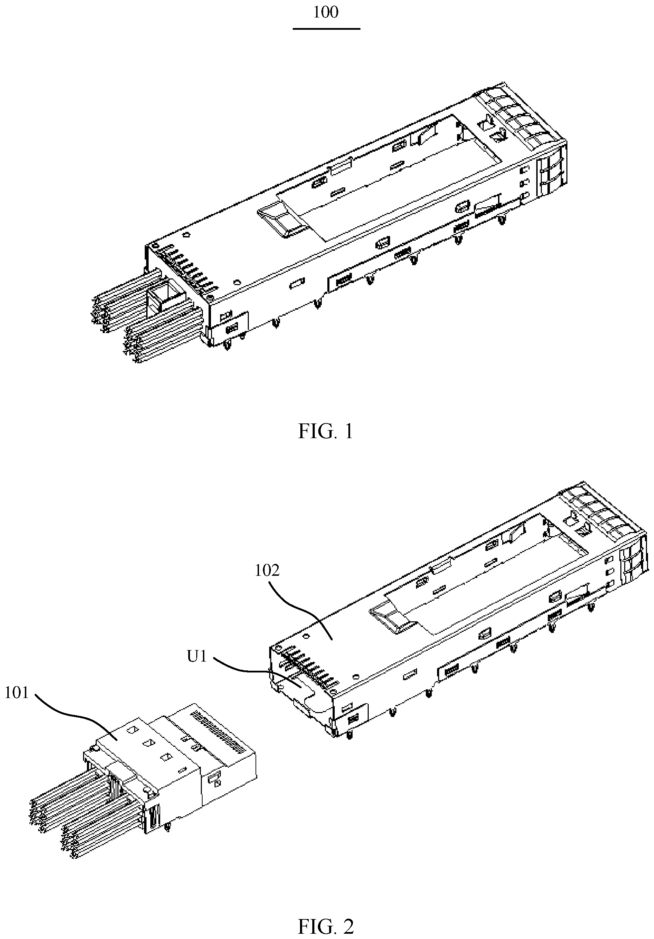

FIG. 1 is a schematic diagram of a structure of a connector according to an embodiment of this application. FIG. 2 is a schematic diagram of a split structure of a connector according to an embodiment of this application. As shown in FIG. 1 and FIG. 2, the connector 100 provided in this embodiment of this application may include a connector module 101 and a housing 102. The connector module 101 may be a quad small form factor pluggable (Quad Small Form Factor Pluggable, QSFP) connector, a quad small form factor pluggable-double density (Quad Small Form Factor Pluggable-Double Density, QSFP-DD) connector. Alternatively, the connector module 101 may be another type of connector. This is not limited herein. A material of the housing 102 may be a metal material such as copper metal or stainless steel. In a specific implementation, the housing 102 may be manufactured through stamping process.

Still refer to FIG. 1 and FIG. 2. The housing 102 may include a first mounting opening U1, and the connector module 101 is inserted into the first mounting opening U1. In addition, the housing 102 may further accommodate an optical module (not shown in the figure). The optical module is an optoelectronic device that can perform optical-to-electrical and electrical-to-optical conversion. The connector module 101 may be electrically connected to the optical module in the housing 102. Optionally, the connector module 101 may include a spring plate, and the optical module may include gold finger. The connector module 101 may be electrically connected to the optical module by contacting the gold finger and the spring plate.

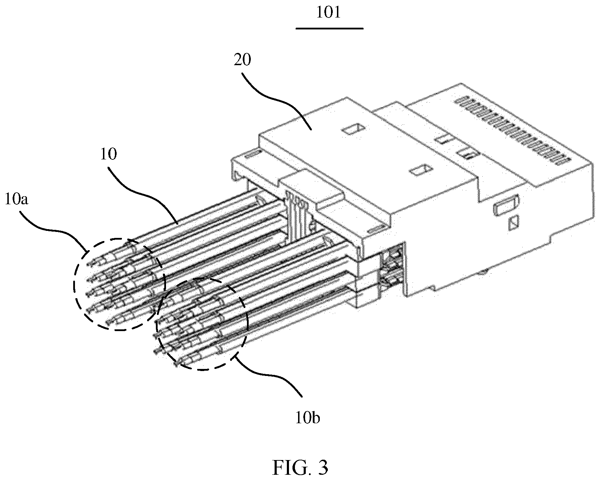

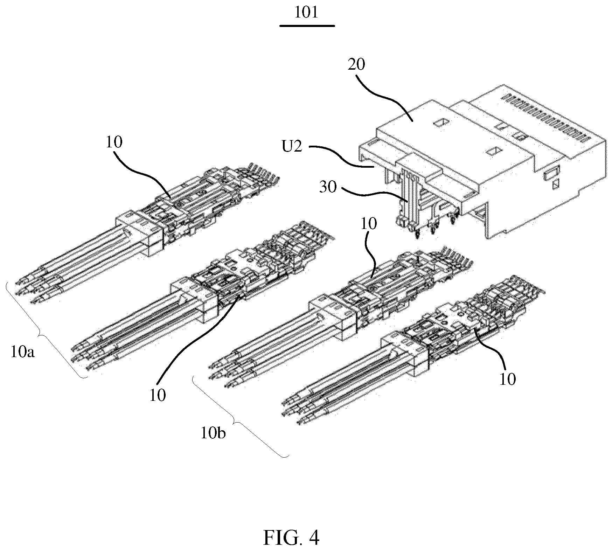

FIG. 3 is a schematic diagram of a structure of a connector module according to an embodiment of this application. FIG. 4 is a schematic diagram of a split structure of a connector module according to an embodiment of this application. With reference to FIG. 2 to FIG. 4, the connector module 101 may include at least four cable assemblies 10 with a same structure and a housing fastener 20. The housing fastener 20 may include a second mounting opening U2. One end of each cable assembly 10 of the connector module 101 is inserted into the second mounting opening U1, and the housing fastener 20 of the connector module 101 is inserted into the first mounting opening U1, so that the connector module 101 may be electrically connected to the optical module by using the cable assembly 10. In actual application, one end of the cable assembly 10 that is not inserted into the second mounting opening U2 may be connected to a component like a circuit board or a chip. In a possible implementation, the housing fastener 20 may be made of engineering plastic. For example, the housing fastener 20 may be made of a liquid crystal polymer (LCP), or may be made of another material. This is not limited herein.

In the accompanying drawings in this embodiment of this application, an example in which the connector module 101 includes the four cable assemblies 10 is used for illustration. In a specific implementation, a quantity of cable assemblies 10 may be set based on an actual requirement. This is not limited herein.

In this embodiment of this application, the at least four cable assemblies with the same structure are disposed in the connector module. In a manufacturing process, each component of the cable assembly needs a mold, and different cable assemblies may share the mold. This can reduce a quantity of molds required by the connector module, and perform normalized module configuration. In this way, manufacturing costs of the connector module are relatively low, and a processing process is relatively simple.

Still refer to FIG. 3 and FIG. 4. The cable assemblies 10 of the connector module 101 may be divided into a first cable assembly group 10a and a second cable assembly group 10b that are disposed side by side. The first cable assembly group 10a includes at least two cable assemblies 10, and all the cable assemblies 10 in the first cable assembly group 10a are stacked. The second cable assembly group 10b includes at least two cable assemblies 10, and all the cable assemblies 10 in the second cable assembly group 10b are stacked. The figure shows an example in which the first cable assembly group 10a includes two cable assemblies 10, and the second cable assembly group 10b includes two cable assemblies 10 for illustration. In a specific implementation, the quantity of cable assemblies 10 in the first cable assembly group 10a and the quantity of cable assemblies 10 in the second cable assembly group 10b may be set based on the actual requirement. This is not limited herein. Optionally, the quantity of cable assemblies 10 in the first cable assembly group 10a may be equal to the quantity of cable assemblies 10 in the second cable assembly group 10b.

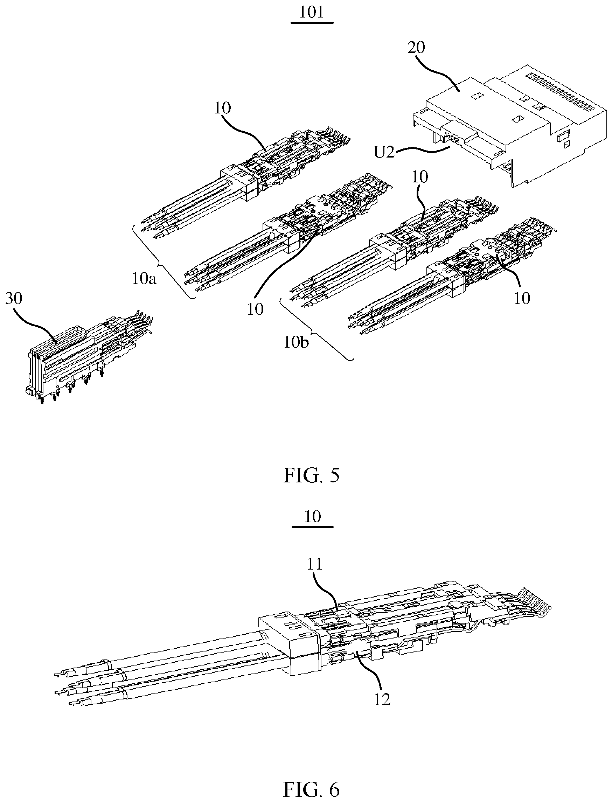

FIG. 5 is a schematic diagram of another split structure of a connector module according to an embodiment of this application. With reference to FIG. 4 and FIG. 5, the connector module in this embodiment of this application further includes a low-speed signal group 30. One end of the low-speed signal group 30 is inserted into the second mounting opening U2, and the low-speed signal group 30 is located between the first cable assembly group 10a and the second cable assembly group 10b. In this embodiment of this application, a low-speed signal can be transmitted by disposing the low-speed signal group 30.

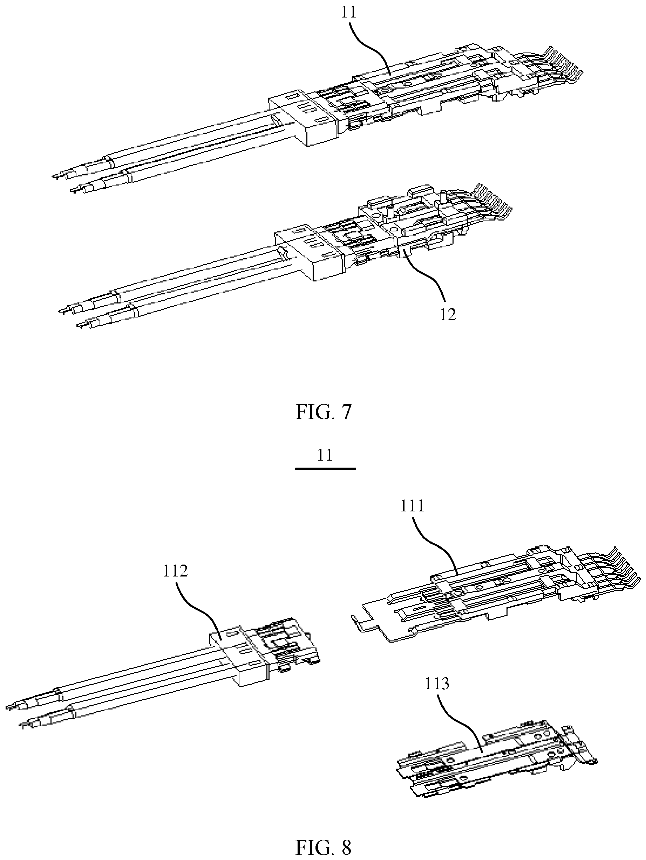

FIG. 6 is a schematic diagram of a structure of a cable assembly according to an embodiment of this application. FIG. 7 is a schematic diagram of a split structure of a cable assembly according to an embodiment of this application. As shown in FIG. 6 and FIG. 7, the cable assembly 10 may include a first cable module 11 and a second cable module 12 that are stacked.

FIG. 8 is a schematic diagram of a split structure of a first cable module according to an embodiment of this application. As shown in FIG. 8, the first cable module 11 may include a first differential terminal pair group 111, a first cable pair group 112, and a first shielding sheet group 113. The first differential terminal pair group 111 is connected to the first cable pair group 112. The first shielding sheet group 113 at least semi-encloses a part of the first differential terminal pair group 111. In this embodiment of this application, the first differential terminal pair group 111 is disposed in the first cable module 11, to transmit a differential signal. In addition, the first shielding sheet group 113 is disposed in the first cable module 11, and the first shielding sheet group 113 at least semi-encloses the part of the first differential terminal pair group 111, so that crosstalk between differential signals in the first differential terminal pair group 111 can be reduced.

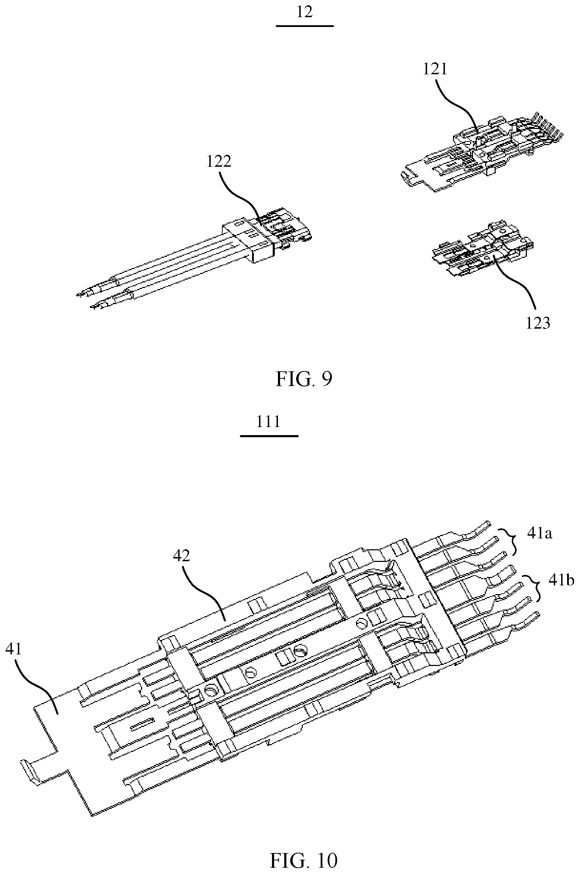

FIG. 9 is a schematic diagram of a split structure of a second cable module according to an embodiment of this application. As shown in FIG. 9, the second cable module 12 includes a second differential terminal pair group 121, a second cable pair group 122, and a second shielding sheet group 123. The second differential terminal pair group 121 is connected to the second cable pair group 122. The second shielding sheet group 123 at least semi-encloses a part of the second differential terminal pair group 121. In this embodiment of this application, the second differential terminal pair group 121 is disposed in the second cable module 12, to transmit the differential signal. In addition, the second shielding sheet group 123 is disposed in the second cable module 12, and the second shielding sheet group 123 at least semi-encloses the part of the second differential terminal pair group 121, so that crosstalk between differential signals in the second differential terminal pair group 121 can be reduced.

With reference to FIG. 6, FIG. 8, and FIG. 9, the first cable pair group 112 is aligned with the second cable pair group 122. An end part of the first differential terminal pair group 111 extends beyond an end part of the second differential terminal pair group 121. In other words, a length of the first differential terminal pair group 111 is greater than a length of the second differential terminal pair group 121. In addition, the end part of the second differential terminal pair group 121 is connected to the first differential terminal pair group 111.

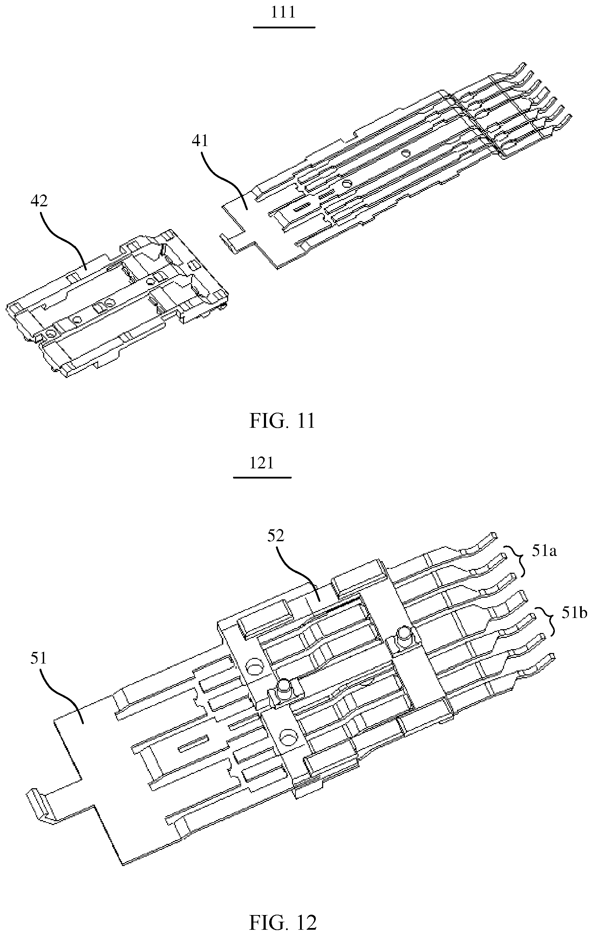

FIG. 10 is a schematic diagram of a structure of a first differential terminal pair group according to an embodiment of this application. FIG. 11 is a schematic diagram of a split structure of a first differential terminal pair group according to an embodiment of this application. As shown in FIG. 10 and FIG. 11, the first differential terminal pair group 111 may include at least one first signal differential pair and a first fastening plastic 42. The first fastening plastic 42 is used to fasten a position of each first signal differential pair in the first differential terminal pair group 111. For example, the first differential terminal pair group 111 in FIG. 10 includes two first signal differential pairs 41a and 41b. In a specific implementation, the first signal differential pairs in the first differential terminal pair group 111 may be disposed on a same first metal member 41. In an actual process, the first metal member 41 may be manufactured through copper alloy stamping, for example, may be manufactured by using phosphor bronze. The first fastening plastic 42 may be made of engineering plastic, for example, the first fastening plastic 42 may be made of liquid crystal polymer.

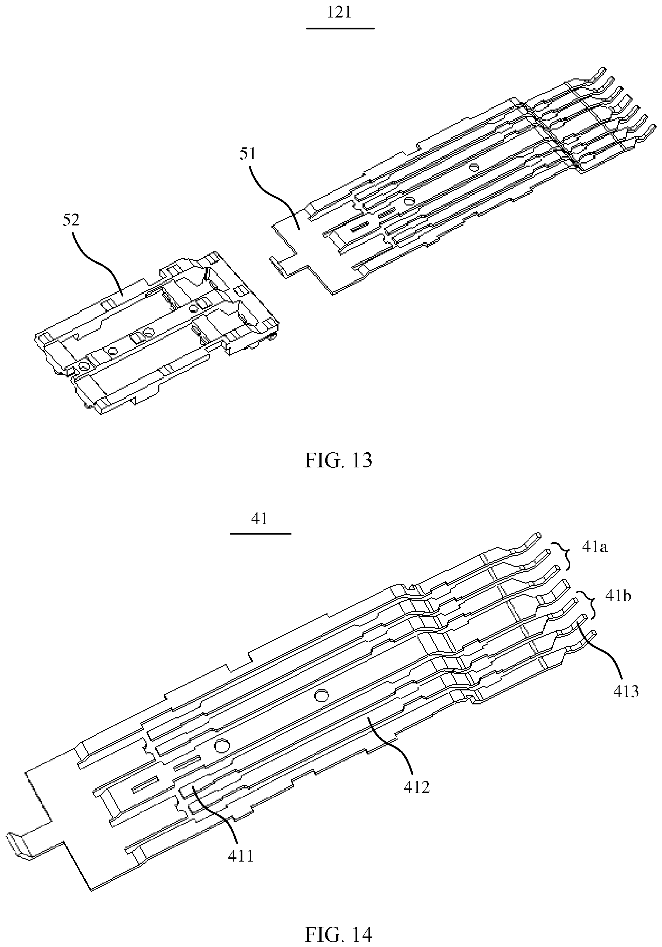

FIG. 12 is a schematic diagram of a structure of a second differential terminal pair group according to an embodiment of this application. FIG. 13 is a schematic diagram of a split structure of a second differential terminal pair group according to an embodiment of this application. As shown in FIG. 12 and FIG. 13, the second differential terminal pair group 121 may include at least one second signal differential pair and a second fastening plastic 52. The second fastening plastic 52 is used to fasten a position of each second signal differential pair in the second differential terminal pair group 121. For example, the second differential terminal pair group 121 in FIG. 11 includes two second signal differential pairs 51a and 51b. In a specific implementation, all the second signal differential pairs in the second differential terminal pair group 121 may be disposed on a same second metal member 51. In an actual process, the second metal member 51 may be manufactured through copper alloy stamping, for example, may be manufactured by using phosphor bronze. The second fastening plastic 52 may be made of engineering plastic, for example, the second fastening plastic 52 may be made of liquid crystal polymer.

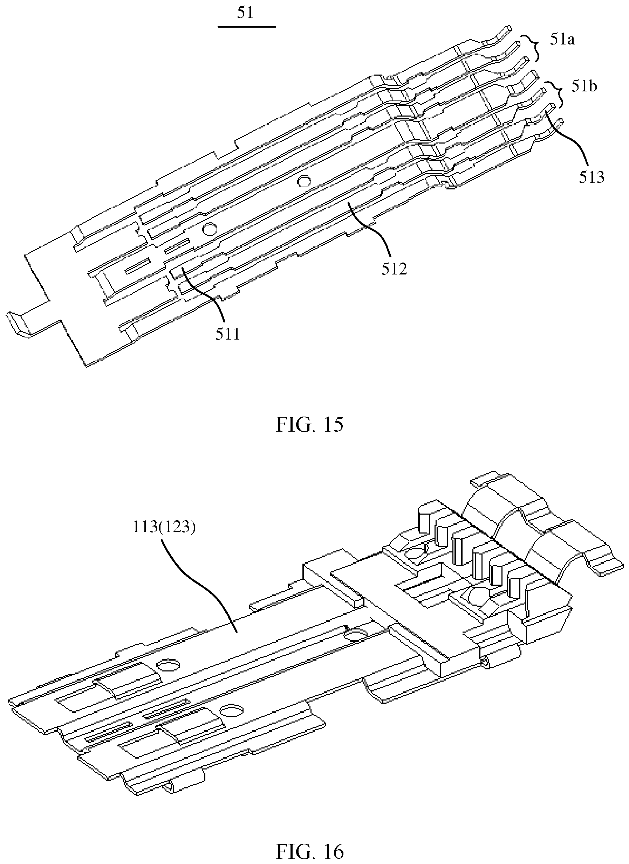

FIG. 14 is a schematic diagram of a structure of a first metal member according to an embodiment of this application. As shown in FIG. 14, the first signal differential pair (41a or 41b) in the first metal member 41 may include a welding portion 411, an intermediate signal connection portion 412, and a spring plate contact portion 413. In a specific implementation, the spring plate contact portion 413 may be in contact with the gold finger of the optical module, so that the first cable module may be electrically connected to the optical module. FIG. 15 is a schematic diagram of a structure of a second metal member according to an embodiment of this application. As shown in FIG. 15, similar to the structure of the first metal member, the second signal differential pair (51a or 51b) in the second metal member 51 may also include a welding portion 511, an intermediate signal connection portion 512, and a spring plate contact portion 513. In a specific implementation, the spring plate contact portion 513 may be in contact with the gold finger of the optical module, so that the second cable module may be electrically connected to the optical module.

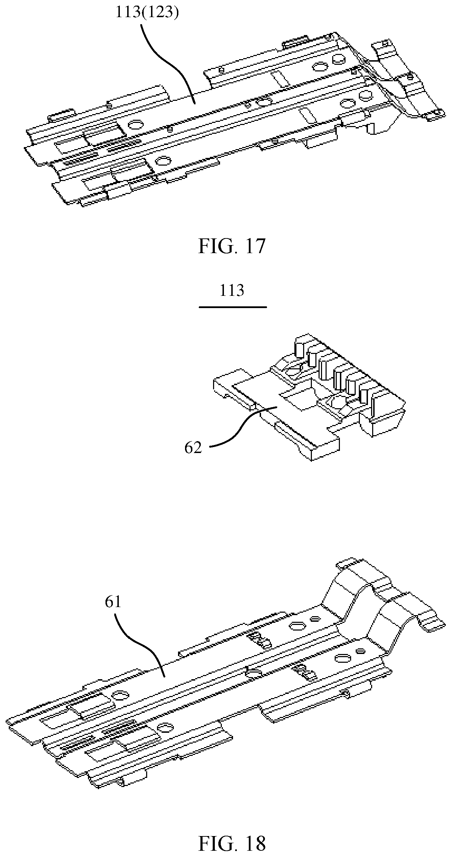

FIG. 16 is a schematic diagram of a front structure of a first shielding sheet group or a second shielding sheet group according to an embodiment of this application. FIG. 17 is a schematic diagram of a rear structure of a first shielding sheet group or a second shielding sheet group according to an embodiment of this application. FIG. 18 is a schematic diagram of a split structure of a first shielding sheet group according to an embodiment of this application. As shown in FIG. 16 to FIG. 18, the first shielding sheet group 113 may include a first metal shielding sheet 61 and a first shielding fastening plastic 62. The first shielding fastening plastic 62 is used to fasten a position of the first metal shielding sheet 61. In an actual manufacturing process, the first metal shielding sheet 61 may be manufactured through copper alloy stamping, for example, the first metal shielding sheet 61 may be made of phosphor bronze. The first metal shielding sheet 61 may provide shielding for the first differential terminal pair group. The first shielding fastening plastic 62 may be made of engineering plastic (for example, liquid crystal polymer).

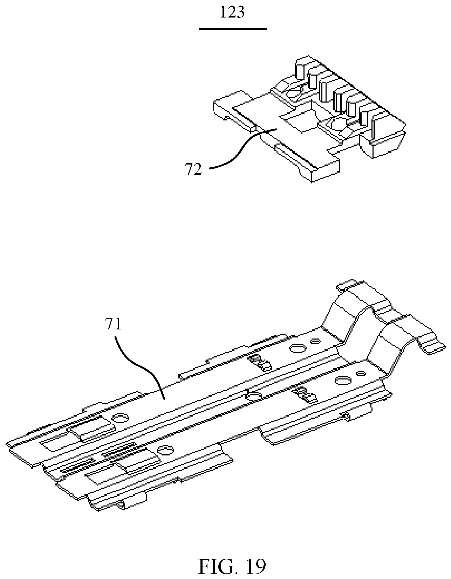

FIG. 19 is a schematic diagram of a split structure of a second shielding sheet group according to an embodiment of this application. As shown in FIG. 16, FIG. 17, and FIG. 19, the second shielding sheet group 123 may include a second metal shielding sheet 71 and a second shielding fastening plastic 72. The second shielding fastening plastic 72 is used to fasten a position of the second metal shielding sheet 71. In an actual manufacturing process, the second metal shielding sheet 71 may be manufactured through copper alloy stamping, for example, the second metal shielding sheet 71 may be made of phosphor bronze. The second metal shielding sheet 71 may provide shielding for the second differential terminal pair group. The second shielding fastening plastic 72 may be made of engineering plastic (for example, liquid crystal polymer).

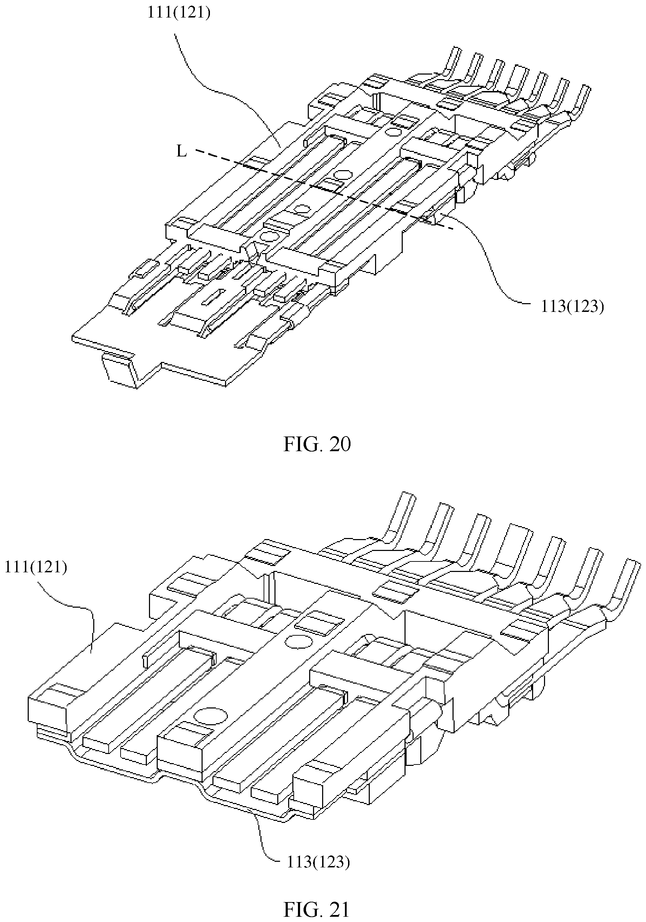

FIG. 20 is a schematic diagram of a position relationship between a first differential terminal pair group (or a second differential terminal pair group) and a first shielding sheet group (or a second shielding sheet group). FIG. 21 is schematic cross-sectional view along a dashed line L in FIG. 20. As shown in FIG. 20 and FIG. 21, the first metal shielding sheet in the first shielding sheet group 113 may semi-enclose the first differential terminal pair group 111. Optionally, the first metal shielding sheet may semi-enclose a position of the intermediate signal connection portion of the first signal differential pair. In this way, the first shielding sheet group 113 may reduce crosstalk between the first signal differential pairs. Similarly, the second metal shielding sheet in the second shielding sheet group 123 may semi-enclose the second differential terminal pair group 121. Optionally, the second metal shielding sheet may semi-enclose a position of the intermediate signal connection portion of the second signal differential pair. In a specific implementation, the first differential terminal pair group 111 may be connected to the first shielding sheet group 113 through welding. The second differential terminal pair group 121 may be connected to the second shielding sheet group 123 through welding. In this way, the second shielding sheet group 123 may reduce crosstalk between the second signal differential pairs.

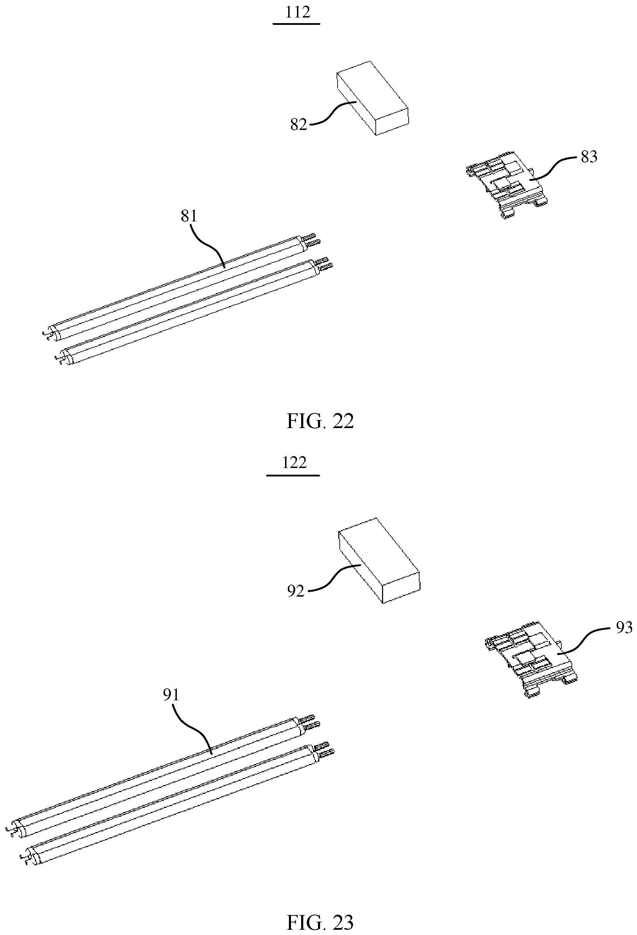

FIG. 22 is a schematic diagram of a split structure of a first cable pair group according to an embodiment of this application. As shown in FIG. 22, the first cable pair group 112 may include at least two first cables 81 disposed side by side, a first weld bonding adhesive 82, and a first weld joint shielding sheet 83. For example, the first cable pair group 112 may include two first cables 81, and a quantity of first cables 81 may be set based on an actual requirement. Each first cable 81 is connected to the first weld joint shielding sheet 83, and the first weld bonding adhesive 82 is used to fasten a weld joint of each first cable 81. In this embodiment of this application, the two first cables 81 disposed side by side in the first cable pair group 112, to transmit the differential signal. In a specific implementation, the first cable 81 may be a high-speed shielded differential cable, and the first cable 81 may be a cable around 30 American wire gauge (American wire gauge, Awg). The first weld bonding adhesive 82 may be made of engineering plastic. In a manufacturing process, the first cable 81 may be first welded to the first differential terminal pair group. Next, the weld joint is fastened by using the first weld bonding adhesive 82, to protect the weld j oint. Then, the first weld joint shielding sheet 83 is welded, to reduce crosstalk at a position of the weld j oint. The first weld joint shielding sheet 83 may be manufactured through copper alloy stamping, for example, may be manufactured by using phosphor bronze.

FIG. 23 is a schematic diagram of a split structure of a second cable pair group according to an embodiment of this application. As shown in FIG. 23, the second cable pair group 122 may include at least two second cables 91 disposed side by side, a second weld bonding adhesive 92, and a second weld joint shielding sheet 93. For example, the second cable pair group 122 may include two second cables 91, and a quantity of second cables 91 may be set based on an actual requirement. Each second cable 91 is connected to the second weld joint shielding sheet 93, and the second weld bonding adhesive 92 is used to fasten a weld joint of each second cable 91. In this embodiment of this application, the two second cables 91 disposed side by side in the second cable pair group 122, to transmit the differential signal. In a specific implementation, the second cable 91 may be the high-speed shielded differential cable, and the second cable 91 may be a cable around 30 American wire gauge (American wire gauge, Awg). The second weld bonding adhesive 92 may be made of engineering plastic. In a manufacturing process, the second cable 91 may be first welded to the second differential terminal pair group. Next, the weld joint is fastened by using the second weld bonding adhesive 92, to protect the weld joint. Then, the second weld joint shielding sheet 93 is welded, to reduce crosstalk at a position of the weld joint. The second weld joint shielding sheet 93 may be manufactured through copper alloy stamping, for example, may be manufactured by using phosphor bronze.

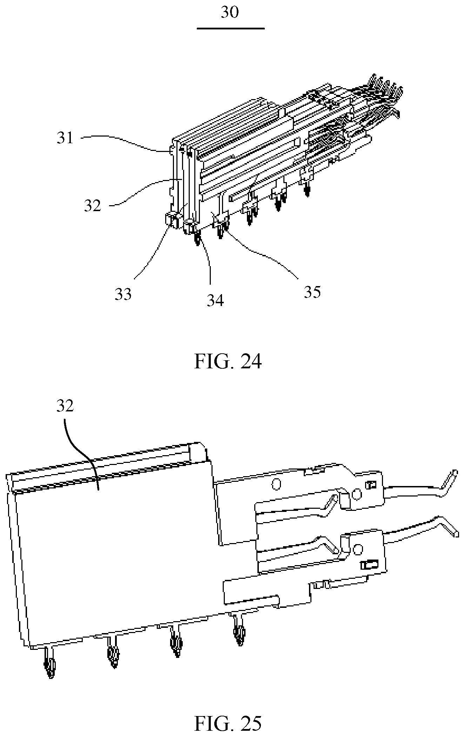

FIG. 24 is a schematic diagram of a structure of a low-speed signal group according to an embodiment of this application. As shown in FIG. 24, the low-speed signal group 30 may include five stacked low-speed connection devices 31, 32, 33, 34, and 35. With reference to FIG. 5 and FIG. 24, an arrangement direction of the low-speed connection devices in the low-speed signal group 30 is consistent with a direction in which the first cable assembly group 10a points toward the second cable assembly group 10b.

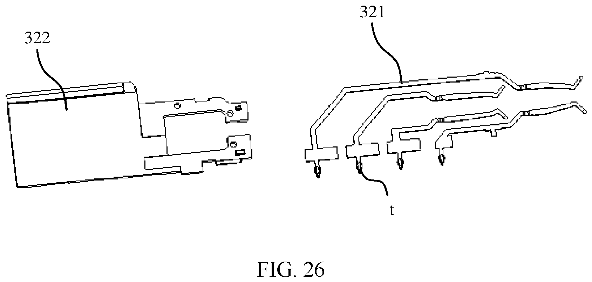

FIG. 25 is a schematic diagram of a structure of a low-speed connection device according to an embodiment of this application. FIG. 26 is a schematic diagram of a split structure of a low-speed connection device according to an embodiment of this application. As shown in FIG. 25 and FIG. 26, the low-speed connection device 32 is used as an example, and each low-speed connection device 32 may include a metal terminal 321 and an injection molding plastic 322 that encapsulates a part of the metal terminal 321. The metal terminal 321 may include four connection terminals t. In a manufacturing process, the metal terminal 321 may be manufactured through the stamping process, and the metal terminal 321 may be made of phosphor bronze material. After the metal terminal 321 is manufactured, the metal terminal 321 may be fastened by using the injection molding plastic 322. A structure and a manufacturing process of the low-speed connection devices 31, 33, 34, and 35 may be similar to the structure and the manufacturing process of the low-speed connection device 32. In a possible implementation, shapes of the low-speed connection devices may be slightly different.

Based on a same technical concept, an embodiment of this application further provides a communication device. The communication device may include any one of the foregoing connectors, and an optical module. The optical module is electrically connected to the connector. The communication device may be an optical communication device, a router, a switch, a server, or the like. Because manufacturing costs of the foregoing connector are relatively low, costs of the communication device including the connector are also relatively low. In addition, the first shielding sheet group (or the second shielding sheet group) is disposed in the connector, so that the crosstalk between the first signal differential pairs (or the second signal differential pairs) can be reduced. Therefore, transmission efficiency of the differential signal transmitted in the connector is relatively high, and signal transmission efficiency of the communication device including the connector is also relatively high.

Although preferred embodiments of this application are described, persons skilled in the art can make changes and modifications to these embodiments after they learn of a basic inventive concept. Therefore, the appended claims are intended to be construed as including the preferred embodiments and all changes and modifications that fall within the scope of this application.

It is clear that the persons skilled in the art can make various modifications and variations to embodiments of this application without departing from the spirit and scope of embodiments of this application. In this case, this application is intended to include these modifications and variations of embodiments of this application provided that they fall within the scope of protection defined by the following claims and their equivalent technologies.

## Claims

1. A connector, comprising a connector module and a housing, wherein
the connector module comprises at least four cable assemblies with a same structure and a housing fastener;
the housing comprises a first mounting opening, and the housing fastener comprises a second mounting opening;
one end of each cable assembly of the connector module is inserted into the second mounting opening; and
the housing fastener of the connector module is inserted into the first mounting opening.

2. The connector according to claim 1, wherein the cable assembly comprises a first cable module and a second cable module that are stacked;
the first cable module comprises a first differential terminal pair group, a first cable pair group, and a first shielding sheet group, wherein the first differential terminal pair group is connected to the first cable pair group, and the first shielding sheet group at least semi-encloses a part of the first differential terminal pair group;
the second cable module comprises a second differential terminal pair group, a second cable pair group, and a second shielding sheet group, wherein the second differential terminal pair group is connected to the second cable pair group, and the second shielding sheet group at least semi-encloses a part of the second differential terminal pair group; and
the first cable pair group is aligned with the second cable pair group, and an end part of the first differential terminal pair group extends beyond an end part of the second differential terminal pair group.

3. The connector according to claim 2, wherein the first differential terminal pair group comprises at least one first signal differential pair and a first fastening plastic; and the first fastening plastic is used to fasten a position of the at least one first signal differential pair; and
the second differential terminal pair group comprises at least one second signal differential pair and a second fastening plastic; and the second fastening plastic is used to fasten a position of the at least one second signal differential pair.

4. The connector according to claim 2, wherein the first shielding sheet group comprises a first metal shielding sheet and a first shielding fastening plastic; and the first shielding fastening plastic is used to fasten a position of the first metal shielding sheet; and
the second shielding sheet group comprises a second metal shielding sheet and a second shielding fastening plastic; and the second shielding fastening plastic is used to fasten a position of the second metal shielding sheet.

5. The connector according to claim 2, wherein the first cable pair group comprises at least two first cables disposed side by side, a first weld bonding adhesive, and a first weld joint shielding sheet; and each first cable is connected to the first weld joint shielding sheet, and the first weld bonding adhesive is used to fasten a weld joint of each first cable; and
the second cable pair group comprises at least two second cables disposed side by side, a second weld bonding adhesive, and a second weld joint shielding sheet; and each second cable is connected to the second weld joint shielding sheet, and the second weld bonding adhesive is used to fasten a weld joint of each second cable.

6. The connector according to any one of claims 1 to 5, wherein the at least four cable assemblies comprise a first cable assembly group and a second cable assembly group that are disposed side by side;
the first cable assembly group comprises at least two of the cable assemblies, and the cable assemblies in the first cable assembly group are stacked; and
the second cable assembly group comprises at least two of the cable assemblies, and the cable assemblies in the second cable assembly group are stacked.

7. The connector according to claim 6, wherein the connector module further comprises a low-speed signal group; and
one end of the low-speed signal group is inserted into the second mounting opening, and the low-speed signal group is located between the first cable assembly group and the second cable assembly group.

8. The connector according to claim 7, wherein the low-speed signal group comprises five stacked low-speed connection devices; and an arrangement direction of the low-speed connection devices in the low-speed signal group is consistent with a direction in which the first cable assembly group points toward the second cable assembly group.

9. The connector according to claim 8, wherein each low-speed connection device comprises a metal terminal and an injection molding plastic that encapsulates a part of the metal terminal.

10. A communication device, comprising the connector according to any one of claims 1 to 9, and an optical module, wherein the optical module is electrically connected to the connector.
